# EUROPEAN PATENT SPECIFICATION

(11) **EP 3 618 503 B1**
(45) Date of publication and mention of the grant of the patent: **27.04.2022**
(21) Application number: 17926972.5
(22) Date of filing: 30.09.2017
(51) Int. Cl.: H04W 40/34, H04L 45/00, H04W 40/02, H04W 40/24

(54) **SERVICE PATH SWITCHING METHOD, DEVICE, STORAGE MEDIUM AND SYSTEM**
DIENSTWEGUMSCHALTUNGSVERFAHREN, VORRICHTUNG, SPEICHERMEDIUM UND SYSTEM
PROCÉDÉ, DISPOSITIF, SUPPORT DE STOCKAGE ET SYSTÈME DE COMMUTATION DE CHEMIN DE SERVICE

(43) Date of publication of application: 04.03.2020
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan Guangdong 523860 (CN)
(74) Representative: Manitz Finsterwald Patent- und Rechtsanwaltspartnerschaft mbB
(86) International application number: PCT/CN2017/104814
(87) International publication number: WO 2019/061414

(56) References cited:
- EP-A1- 2 938 129
- CN-A- 101 472 313
- CN-A- 101 572 695
- CN-A- 102 469 082
- CN-A- 104 284 383
- CN-A- 105 744 549
- US-A1- 2017 180 997
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1-522, XP051230010, [retrieved on 2016-12-16]

## Description

### TECHNICAL FIELD

The present disclosure relate to wireless communication technologies, and more particularly, to a methods and devices for switching a service path.

### BACKGROUND

With the development of communication technology, the research on the 5th Generation mobile communication technology (5G, 5th Generation) has also been launched. In the 5G system, Multi-Connection data transmission is one of the key technologies in 5G networks. The Multi-Connection data transmission refers to data transmission between a terminal and a network side through access links provided by a plurality of access networks. For example, the terminal may transmit data with the network side through an access link provided by the 3rd Generation Partnership Project (3GPP) protocol network and an access link provided by a non-3GPP protocol network, and the terminal may also transmit data with the network side through access links provided by different Radio Access Technology (RAT) networks in the 3GPP protocol.

The terminal may separate a service into different access links in the process of initiating or processing the service, and when the quality of the access links drops, the service needs to be switched. At present, there is no solution for switching the service path under the condition of multi-connection data transmission.

EP2938129A1 discloses a method for communicating carried out by a terminal in a wireless communication system supporting a multiple access network. US2017180997A1 relates to a method performed in a communication device. WO2013010005A1 discloses a method and apparatus for multiple radio access mode operation.

### SUMMARY

The scope of this invention is defined by the appended claims. Further embodiments of the invention are defined by the dependent claims. The embodiments which do not fall within the scope of the appended claims are to be interpreted as example embodiments or background information useful only for understanding the invention. It is an object of the invention to provide methods and devices for switching a service path, which can switch the transmission paths of the service under a multi-connection data transmission environment of 5G. This object is solved by the subject matter of the independent claims.

The technical solutions of the present disclosure may be realized according to the appended independent claims 1, 4, 9 and 10, which disclose methods and devices for switching a service path.

### BRIEF DESCRIPTION OF THE DRAWINGS

Fig. 1 is a schematic diagram of a basic network architecture of 5G;
Fig. 2 is a schematic diagram of a network architecture provided by the present disclosure;
Fig. 3 is a flow chart of switching service path provided by the present disclosure;
Fig. 4 is a flow chart of switching service path provided by the present disclosure;
Fig. 5 is a flow chart of a first specific example provided by an embodiment of the present disclosure;
Fig. 6 is a flow chart of a second specific example provided by an embodiment of the present disclosure;
Fig. 7 is a flow chart of a third specific example provided by an embodiment of the present disclosure;
Fig. 8A is a schematic composition diagram of a network device provided by an embodiment of the present disclosure;
Fig. 8B is a schematic composition diagram of another network device provided by an embodiment of the present disclosure;
Fig. 9 is a schematic diagram of a specific hardware structure of a network device provided by an embodiment of the present disclosure;
Fig. 10 is a schematic composition diagram of a terminal device provided by an embodiment of the present disclosure;
Fig. 11 is a schematic diagram of a specific hardware structure of a terminal device provided by an embodiment of the present disclosure; and
Fig. 12 is a schematic composition diagram of a system for switching a service path provided by an embodiment of the present disclosure.

### DETAILED DESCRIPTION

In order to understand the features and technical contents of the embodiments of the present disclosure in more detail, the implementation of the embodiments of the present disclosure will be described in detail below with reference to the attached drawings, which are for reference only and are not intended to limit the embodiments of the present disclosure.

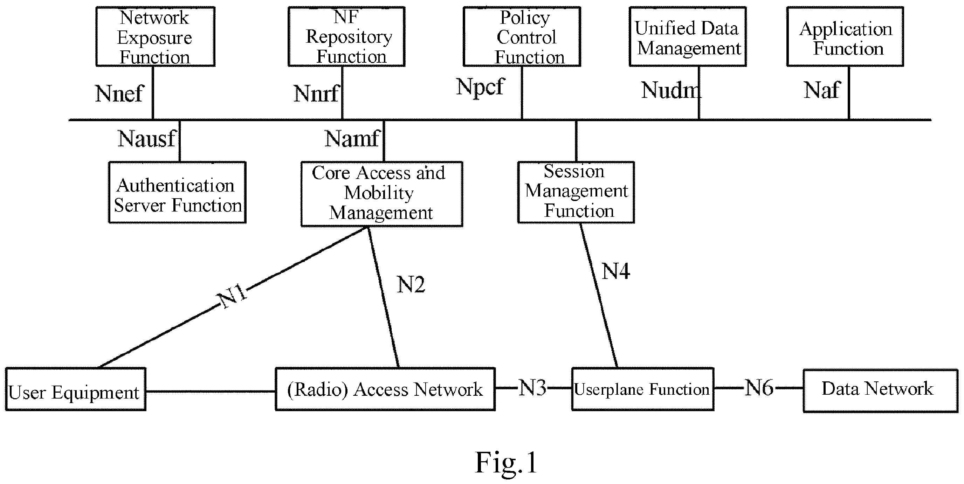

Fig. 1 illustrates a basic network architecture of 5G with multiple accesses, which may be referred to as a Service-Based Architecture (SBA). As shown in Fig. 1, a User Equipment (UE) is accessed to a Core Access and Mobility Management Function (Core Access and Moblity Management Function, AMF) through a (Radio) Access Network ((R)AN), and the UE may also be directly accessed to the AMF. The AMF is used to process control plane messages of the network, and the function of the AMF is similar to EPS Mobility Management (EMM) in a Mobility Management Entity (MME) in a Long Term Evolution (LTE) system. An Authentication Server Function (AUSF) is similar to an authentication function of the MME in the LTE system, which realizes bidirectional authentication of the UE, and supports a unified authentication framework. A Userplane Function (UPF) is similar to integration of a Service Gateway S-GW and a PDN Gateway P-GW in the LTE system, and is connected with a data network (DataNetwork). A Session Management Function (Seesion Management Function, SMF) is similar to an EPS Session Management ESM Function in the LTE system, which mainly manages, establishes, modifies and releases sessions. From this, it can be seen that the function set of the AUSF, the AMF and the SMF is similar to the MME in the LTE system. In addition, the structure shown in Fig. 1 further includes: a Network Exposure Function (NEF), a NF Repository Function (NRF), a Policy Control Function (PCF), and a Unified Data Management (UDM) and an Application Function (AF). The NEF is used to show some capabilities of the network functions to the outside, such as monitoring capabilities, supply capabilities, and policy or billing capabilities. The NRF may support a service discovery function; the PCF supports a unified policy framework for managing network behaviors. The UDM includes an application Front End (FE) and a User Data Repertory (UDR). The FE may access subscriber information in the UDR. The UDM has functions similar to the HSS in the LTE system. The UDR provides subscription data storage services. The application Front End FE provides data-based application logics. The AF is used to provide application services.

As can be seen from the network in the above architecture, the architecture between the (Radio) Access Network (R)AN and the data network DataNework may be called a 5G core network, and network elements in the 5G core network are called 5G core network network elements. In 5G technology, terminals are allowed to realize multi-connection data transmission through access links of a variety of access networks, and the variety of access networks may include access networks adopting 5G New Radio (NR) access technology, LTE access, or the like that conform to 3GPP standards, and may also include non-3GPP standard access networks such as Wireless-Fidelity (WIFI) networks, etc., which will not be elaborated in the present embodiment.

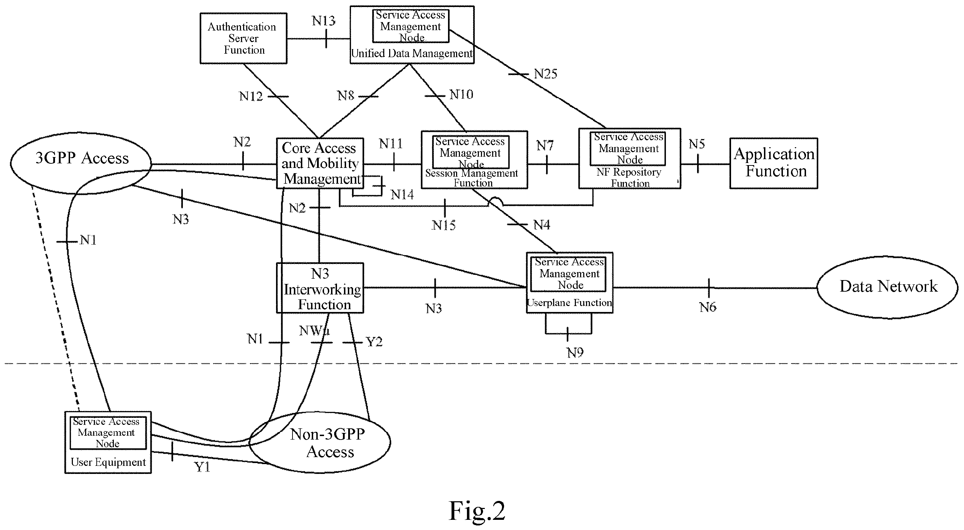

In order to carry out multi-connection data transmission for services in a 5G network, the embodiments of the present disclosure additionally set a Service Access Management Node (ATSSS/AT3SF) in the network architecture shown in Fig. 1 to control a data flow to be transmitted for multi-connection transmission. The data transmission of Dual Connection (DC) based on the 5G network architecture is taken as an example. When the data flow to be transmitted is a downlink data flow, the service access management node may be set as an independent network element entity between the (R)AN and the 5G core network network element; and may also be distributed in the form of functional module in the network element of the 5G core network having data transmission requirements with UE, such as in the UDM, the SMF, the PCF and the UPF, which will not be elaborated in the present embodiment. When the data flow to be transmitted is an uplink data flow, the service access management node is arranged between the (R)AN and the UE as an independent network element entity, and may also be implemented as a functional module of the UE. In the embodiments of the present disclosure, the service access management node AT3SF may be distributed in the network element of the 5G core network having data transmission requirements, such as the UDM, the SMF, the PCF, the SMF and the UPF, and may also be arranged in the UE. Referring to the architecture diagram shown in Fig. 2, an access network conforming to 3GPP standard may be provided by 3GPP protocol access device (3GPP Access) such as a 5G base station gNB or a LTE base station eNB; and non-3GPP standard access network may be provided by a Non-3GPP access device (Non-3GPP Access) such as a WIFI access point.

Based on the above contents, the following embodiments are proposed.

### First embodiment

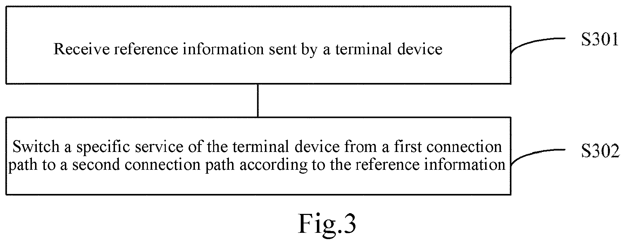

Fig. 3 illustrates a method for switching a service path provided by an embodiment of the present disclosure. The method is applied to a network device which is a service access management node ATSSS, and the method includes the following steps.

In S301: reference information sent by a terminal device is received.

In S302: a specific service of the terminal device is switched from a first connection path to a second connection path according to the reference message.

The first connection path includes a first access link between the terminal device and a first access device, and a first core network link between the first access device and a core network device; and the second connection path includes a second access link between the terminal device and a second access device, and a second core network link between the second access device and the core network device.

For the technical solution shown in Fig. 3, it should be noted that the first access device and the second access device may be an access device conforming to 3GPP protocol and a non-3GPP protocol access device respectively, and may also be access devices of different RATs in the 3GPP protocol respectively, which will not be elaborated in the present embodiment. Moreover, it should be noted that during switching, the first connection path may also be referred to as a source connection path, and the second connection path may also be referred to as a target connection path.

It may be understood that the terminal device in the embodiments of the present disclosure may include a cellular phone, a smart phone, a Session Initiation Protocol (SIP) phone, a laptop computer, a Personal Digital Assistant (PDA), a satellite radio, a global positioning system, a multimedia device, a video device, a digital audio player (e.g., MP3 player), a camera, a gaming console, a tablet computer, or any other device having similar functions. At the same time, the terminal device may also be called by those skilled in the art as a user equipment, a terminal, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminologies.

For the technical solution shown in Fig. 3, in a probable implementation, the reference information may include at least one or more of the followings: attribute information of the second connection path, description information of the specific service, and preference description information and request information of the terminal device.

Specifically, the attribute information of the second connection path may include at least one or more of the followings: type information of the second connection path; identification information of the second connection path; and link quality information of the second connection path and available instruction information of the second connection path.

The description information of the second connection path may include at least one or more of the followings: Packet Data Network (PDN) connection information of the specific service, Quality of Service (Qos) information of the specific service, bearer information of the specific service, data flow information of the specific service, and Protocol Data Unit (PDU) session of the specific service;

The preference description information of the terminal device is configured to indicate preference information of a connection path used by the terminal device for the specific service; and
the request information of the terminal device is configured to characterize that the terminal device desires to switch the specific service to the second connection path.

It may be understood that through the description of the above-mentioned reference information, the network device can learn the attribute of the second connection path, and can also learn the description for the specific service and the preference of the terminal, so that the network device can switch the specific service to the second connection path preferred by the terminal device according to the above-mentioned information.

For the technical solution shown in Fig. 3, in a probable implementation, the receiving the reference information sent by the terminal device may include:
receiving the reference information sent by the terminal device through the first connection path or the second connection path; or, receiving the reference information sent by the terminal device jointly through the first connection path or the second connection path.

For the above implementation, it should be noted that in the first connection path and the second connection path, a protocol stack interface is arranged between the terminal device and the network device for data transmission; therefore, the reference information may be carried in a control message or user data transmitted through the protocol stack interface between the network device and the terminal device.

For the technical solution shown in Fig. 3, in a probable implementation, before switching the specific service of the terminal device from the first connection path to the second connection path according to the reference message, the method further includes:
after receiving the reference information, determining to switch the specific service from the first connection path to the second connection path; and
establishing a connection related to the terminal device in the second connection path.

Based on the above implementation, during specific implementation, the establishing the connection related to the terminal device in the second connection path may include:
when the network device determines that no connection is established in the second connection path for the terminal device, establishing the related connection in the second connection path for the terminal device; and
when the network device determines that a connection is already established in the second connection path for the terminal device, adaptively modifying the second connection path according to the specific service.

It should be noted that a specific manner for the above adaptive modification may include: allocating a corresponding new transmission channel in the second connection path for the specific service; or, adding the specific service to an existing transmission channel in the second connection path.

It may be understood that through the above implementations, the network device has been ready for switching the connection path for the specific service of the terminal device, and then, the network device may switch the specific service from the first connection path to the second connection path.

For the technical solution shown in Fig. 3, in a probable implementation, the switching the specific service of the terminal device from the first connection path to the second connection path according to the reference message may include:
sending a switching message to the terminal device;
where, the switching message includes at least one or more of the followings:
   an acknowledgment command for the terminal device to switch the specific service to the second connection path;
   acknowledgment information for the specific service switched to the second connection path;
   attribute information of the second connection path, for example, type information and identification information of the second connection path;
   duration information for switching to the second connection path;
   activation time point information for switching to the second connection path; and
   configuration information for switching to the second connection path.

It may be understood that after receiving the above-mentioned switching message, the terminal device may switch the specific service from the first connection path to the second connection path according to contents contained in the switching message.

For the technical solution shown in Fig. 3, it should also be noted that the specific service may be a task newly created by the terminal device or a service currently performed by the terminal device, which will not be elaborated in the present embodiment.

Through the technical solution shown in Fig. 3, the network device can receive the reference message for the specific service sent by the terminal, and switch the specific service from the first connection path to the second connection path, so that the service transmission path can be switched under the multi-connection data transmission environment of 5G.

### Second embodiment

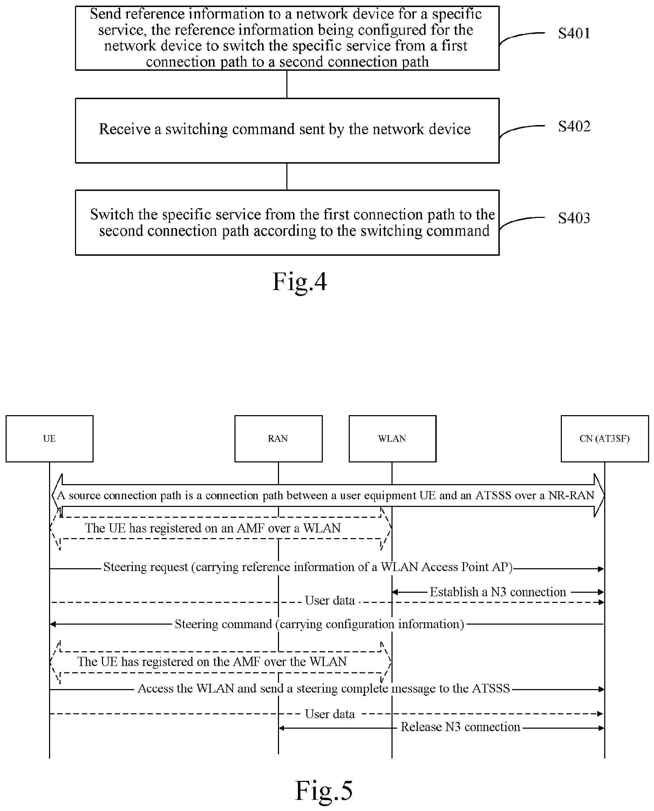

Based on the same inventive concept as the foregoing embodiments, referring to Fig. 4, which illustrates a method for switching a service path provided by an embodiment of the present disclosure, the method may be applied to a terminal device and includes the following steps.

In S401: a reference message is sent to a network device for a specific service.

The reference message is configured for the network device to switch the specific service from a first connection path to a second connection path.

In S402: a switching command sent by the network device is received.

In S403: the specific service is switched from the first connection path to the second connection path according to the switching command.

The first connection path includes a first access link between the terminal device and a first access device, and a first core network link between the first access device and a core network device; and the second connection path includes a second access link between the terminal device and a second access device, and a second core network link between the second access device and the core network device.

For the technical solution shown in Fig. 4, it should be noted that the first access device and the second access device may be an access device conforming to 3GPP protocol and a non-3GPP protocol access device respectively, and may also be access devices of different RATs in the 3GPP protocol respectively, which will not be elaborated in the present embodiment. Moreover, it should also be noted that the first connection path may also be referred to as a source connection path, and the second connection path may also be referred to as a target connection path during switching. In addition, the network device may be a service access management node (ATSSS/AT3SF). It may be understood that the service access management node (ATSSS/AT3SF) may be set as an independent network element entity between a (R)AN and the network element of a 5G core network; and may also be distributed in the form of functional module in the network element of the 5G core network having data transmission requirements with UE, such as a UDM, a SMF, a PCF and a UPF, which will not be elaborated in the embodiment of the present disclosure.

For the technical solution shown in Fig. 4, in a probable implementation, the reference information may include at least one or more of the followings: attribute information of the second connection path, description information of the specific service, and preference description information and request information of the terminal device.

Specifically, the attribute information of the second connection path may include at least one or more of the followings: type information of the second connection path; identification information of the second connection path; and link quality information of the second connection path and available instruction information of the second connection path.

The description information of the second connection path may include at least one or more of the followings: Packet Data Network (PDN) connection information of the specific service, Quality of Service (Qos) information of the specific service, bearer information of the specific service, data flow information of the specific service, and Protocol Data Unit (PDU) session of the specific service.

The preference description information of the terminal device is configured to indicate preference information of a connection path used by the terminal device for the specific service.

The request information of the terminal device is configured to characterize that the terminal device desires to switch the specific service to the second connection path.

It may be understood that through the description of the above-mentioned reference information, the network device can learn the attribute of the second connection path, and can also learn the description for the specific service and the preference of the terminal, so that the network device can switch the specific service to the second connection path preferred by the terminal device according to the above-mentioned information.

For the technical solution shown in Fig. 4, in a probable implementation, the sending the reference message to the network device for the specific service may include:
sending the reference information to the network device through the first connection path or the second connection path; or, sending the reference information to the network device jointly through the first connection path or the second connection path.

Specifically, since the first connection path and the second connection path exist between the terminal and the core network, the terminal may send the reference message to the network device through either of the two connection paths. Moreover, the terminal may also partition the reference message and send the reference message to the network device simultaneously through the two connection paths. In addition, the terminal may also send the reference message to the network device simultaneously through the two connection paths. When the network device receives the reference message through any connection path, the reference message transmitted by the other connection path is ignored, thus avoiding the reduction of the transmission stability of the reference message due to the reduction of the transmission quality.

For the above implementation, it should be noted that in the first connection path and the second connection path, a protocol stack interface is arranged between the terminal device and the network device for data transmission; therefore, the reference information may be carried in a control message or user data transmitted through the protocol stack interface between the network device and the terminal device.

For the technical solution shown in Fig. 4, in a probable implementation, the switching message includes at least one or more of the followings:
an acknowledgment command for the terminal device to switch the specific service to the second connection path;
acknowledgment information for the specific service switched to the second connection path;
attribute information of the second connection path, for example, type information and identification information of the second connection path;
duration information for switching to the second connection path;
activation time point information for switching to the second conncction path; and
configuration information for switching to the second connection path.

It may be understood that after receiving the above-mentioned switching message, the terminal device may switch the specific service from the first connection path to the second connection path according to contents contained in the switching message.

For the technical solution shown in Fig. 4, it should also be noted that the specific service may be a task newly created by the terminal device or a service currently performed by the terminal device, which will not be elaborated in the present embodiment.

Through the technical solution shown in Fig. 4, the terminal device may send the reference message for the specific service to the network device, so that the network device switches the specific service from the first connection path to the second connection path, and the terminal device may also switch the specific service from the first connection path to the second connection path by receiving a switching command fed back by the network device, so that the service transmission path can be switched under the multi-connection data transmission environment of 5G.

### Third embodiment

Based on the same inventive concept as the forgoing embodiment, this embodiment illustrates the solutions of the forgoing embodiments through the specific examples as follows. In the specific examples of the present embodiment, a service access management node ATSSS is deployed in a network element of a core network.

### First specific example

Referring to an interaction flow chart shown in Fig. 5, a source connection path is a connection path between a user equipment UE and an ATSSS through a NR-RAN. After the UE has registered on an AMF through a WLAN, the UE sends a Steering request to the ATSSS through the NR-RAN, where the request carries reference information of a WLAN Access Point AP. After receiving the steering request, the ATSSS establishes a N3 connection (N3 connection setup) with the WLAN Access Point and sends a steering command (Steering command) to UE. The UE accesses the WLAN according to the steering command and sends a steering complete message (steering complete) to the ATSSS. Then, the ATSSS may release N3 connection (N3 connection release) with the NR-RAN.

The flow shown in Fig. 5 illustrates that the terminal sends WLAN AP information to the ATSSS through the control signaling Steering request in the NR-RAN, thus realizing the process of sending the reference message in the first access path through the control signaling in the foregoing embodiments.

### Second specific example

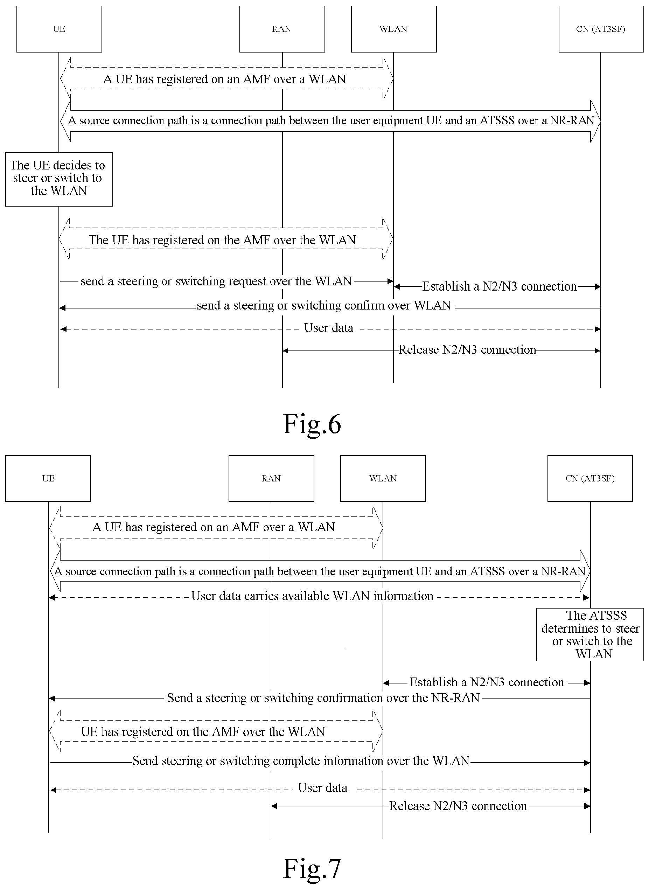

Referring to an interaction flow chart shown in Fig. 6, a source connection path is a connection path between a user equipment UE and an ATSSS through a NR-RAN. After the UE has registered on an AMF through a WLAN, the UE determines to steer or switch to the WLAN. At this moment, the UE sends a steering/switching request to a WLAN AP. The WLAN AP establishes a N2/N3 connection, i.e., N2/N3 connection setup, with the ATSSS. The ATSSS sends a steering/switching confirm over WLAN to the UE. Then, the ATSSS may release the N2/N3 connection (N2/N3 connection release) with the NR-RAN.

The flow shown in Fig. 6 illustrates that the terminal sends a request message of switching to the WLAN to the ATSSS through the WLAN, thus realizing the process of sending the reference message in the second access path in the foregoing embodiments.

### Third specific example

Referring to an interaction flow chart shown in Fig. 7, a source connection path is a connection path between a user equipment UE and an ATSSS through a NR-RAN. After the UE has registered on an AMF through a WLAN, the UE sends user data (User data) to the ATSSS through the NR-RAN, where the user data carries available WLAN information. After the ATSSS determines to steer or switch to the WLAN according to the available WLAN information, the ATSSS establishes a N2/N3 connection, i.e., N2/N3 connection setup, with the WLAN, and sends a steering or switching request to the UE through the NR-RAN (steering/switching confirm over RAN). After completing the steering or switching, the UE sends a steering or switching confirm to the ATSSS through the WLAN (steering/switching confirm over WLAN). Finally, the ATSSS may release N2/N3 connection (N2/N3 connection release) with the NR-RAN.

The flow shown in Fig. 7 illustrates the process that the terminal sends the reference message to the ATSSS through the WLAN information carried by the user data in the NR-RAN.

### Fourth embodiment

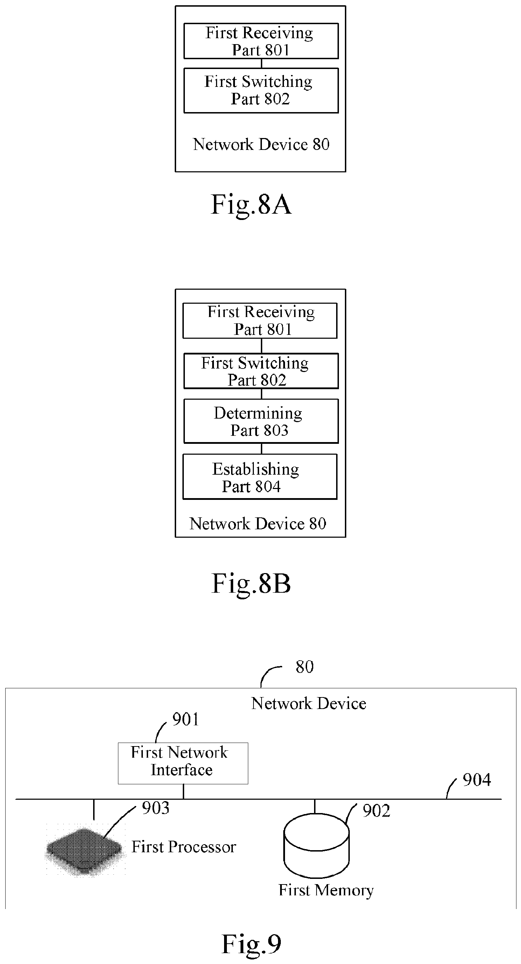

Based on the same inventive concept as the foregoing embodiments, referring to Fig. 8A, which illustrates a composition of a network device 80 provided by an embodiment of the present disclosure, the network device 80 includes: a first receiving part 801 and a first switching part 802, where:
the first receiving part 801 is configured to receive reference information sent by a terminal device; and
the first switching part 802 is configured to switch the specific service of the terminal device from a first connection path to a second connection path according to the reference message.

In the foregoing solution, the receiving part is configured to receive the reference information sent by the terminal device through the first connection path or the second connection path; or, receive the reference information sent by the terminal device jointly through the first connection path or the second connection path.

In the foregoing solution, referring to Fig. 8B, the network device 80 further includes: a determining part 803 and an establishing part 804; where, the determining part 803 is configured to, after receiving the reference information, determine to switch the specific service from the first connection path to the second connection path; and
the establishing part 804 is configured to establish a connection related to the terminal device in the second connection path.

In the foregoing solution, the establishing part 804 is configured to, when the network device determines that no connection is established in the second connection path for the terminal device, establish the related connection in the second connection path for the terminal device; and
when the network device determines that a connection is already established in the second connection path for the terminal device, adaptively modify the second connection path according to the specific service.

In the foregoing solution, the establishing part 804 is configured to allocate a corresponding new transmission channel in the second connection path for the specific service; or, add the specific service to an existing transmission channel in the second connection path.

In the foregoing solution, the first switching part 802 is configured to send a switching message to the terminal device;
where, the switching message includes at least one or more of the followings:
an acknowledgment command for the terminal device to switch the specific service to the second connection path;
acknowledgment information for the specific service switched to the second connection path;
attribute information of the second connection path, for example, type information and identification information of the second connection path;
duration information for switching to the second connection path;
activation time point information for switching to the second connection path; and
configuration information for switching to the second connection path.

It may be understood that in the present embodiment, "partial" may be a part of circuit, a part of processor, a part of program or software, etc., and, may also be a unit, a module or a non-module.

In addition, each component in the present embodiment may be integrated in one processing unit, or each unit may exist alone physically, or two or more units may be integrated in one unit. The integrated unit above may be implemented in the form of hardware, or in the form of software function unit.

The integrated unit may also be stored in a computer-readable storage medium if being implemented in the form of a software function module, but not sold or used as an independent product. Based on such understanding, the essence of the technical solutions of the embodiment, or the part contributing to the prior art or all or a part of the technical solutions, may be embodied in the form of a software product. The computer software product is stored in a storage medium including a number of instructions such that a computer device (which may be a personal computer, a server, or a network device, etc.) or a processor performs all or a part of steps of the method described in the embodiment. The foregoing storage medium includes: any medium that is capable of storing program codes such as a USB disk, a mobile hard disk, a Read Only Memory (ROM), a Random Access Memory (RAM), a magnetic disk or an optical disk, and the like.

Therefore, the embodiment provides a computer readable medium that stores a program for switching a service path, and when the program for switching a service path is executed by at least one processor, the steps of the method described in the first embodiment above are implemented.

Based on the network device 80 and the computer readable medium, referring to Fig. 9, which illustrates a specific hardware structure of the network device 80 provided by the embodiment of the present disclosure, the network device 80 may include: a first network interface 901, a first memory 902 and a first processor 903, where the components are coupled together through a bus system 904. It can be understood that the bus system 904 is configured to realize connection and communications between these components. The bus system 904 includes a power bus, a control bus, and a status signal bus in addition to a data bus. However, for the sake of clarity, various buses are designated as the bus system 904 in Fig. 9. The first network interface 901 is configured to receive and send a signal in the process of receiving and sending information with other external network elements.

The first memory 902 is configured to store a computer program capable of running on the first processor 903.

The first processor 903 is configured to, when running the computer program, execute:
receiving reference information sent by a terminal device; and
switching a specific service of the terminal device from a first connection path to a second connection path according to the reference message.

It can be understood that the first memory 902 in the embodiments of the present disclosure may be a volatile memory or a non-volatile memory, or may include both the volatile and non-volatile memories. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM) that acts as an external high speed cache. By way of illustration but not limitation, RAMs are available in many forms such as Static RAM (SRAM), Dynamic RAM (DRAM), Synchronous DRAM (SDRAM), Double Data Rate SDRAM (DDRSDRAM), Enhanced SDRAM (ESDRAM), Synchlink DRAM (SLDRAM), and Direct Rambus RAM (DRRAM). The first memory 902 of the systems and methods described herein is intended to include but not limited to these and any other suitable types of memories.

The first processor 903 may be an integrated circuit chip with a signal processing capability. In an implementation process, the steps in the foregoing methods may be completed using an integrated logic circuit of hardware or an instruction in a form of software in the first processor 903. The above first processor 903 may be a general purpose processor, a Digital Signal Processor (DSP), an Application Specific Integrated Circuit (ASIC), a Field Programmable Gate Array (FPGA) or other programmable logic device, a discrete gate, or a transistor logic device, and a discrete hardware assembly. The methods, steps, and logic diagrams disclosed in the embodiments of the present disclosure may be implemented or executed. The general purpose processor may be a microprocessor or the processor may be any conventional processor, or the like. The steps of the methods disclosed with reference to the embodiments of the present disclosure may be directly executed and accomplished by means of a hardware decoding processor or may be executed and accomplished using a combination of hardware and software modules in the decoding processor. The software module may be located in a mature storage medium in the art, such as a random memory, a flash memory, a read-only memory, a programmable read-only memory, or an electrically erasable programmable memory, a register, etc. The storage medium is located in the first memory 902. The first processor 903 reads information from the first memory 902 and completes the steps of the foregoing methods in combination with the hardware of the processor.

It is to be understood that the embodiments described herein may be implemented in hardware, software, firmware, middleware, microcode, or a combination thereof. For hardware implementation, the processing unit may be implemented in one or more Application Specific Integrated Circuits (ASICs), Digital Signal Processing (DSP), DSP Device (DSPD), Programmable Logic Device (PLD), Field-Programmable Gate Array (FPGA), general purpose processor, controller, microcontroller, microprocessor, and other electronic units for performing the functions described herein, or a combination thereof.

For software implementations, the technologies described herein may be implemented by modules (e.g., procedures, functions, etc.) that perform the functions described herein. Software codes may be stored in the memory and executed by the processor. The memory may be implemented in the processor or external to the processor.

Specifically, the first processor 903 in the network device 90 is further configured to execute the method steps described in the above first embodiment when running the computer program, which will not be elaborated here.

### Fifth embodiment

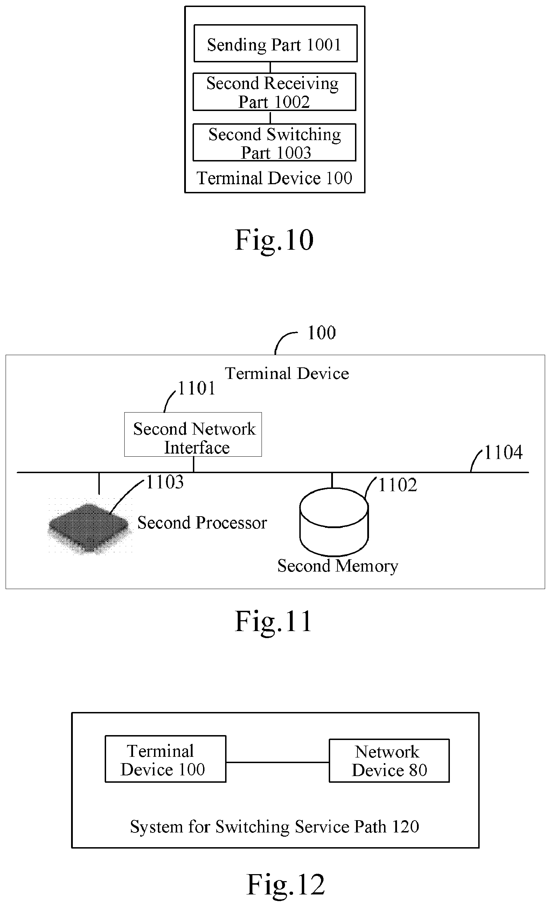

Based on the same inventive concept as the foregoing embodiments, referring to Fig. 10, which illustrates a composition of a terminal device 100 provided by an embodiment of the present disclosure, the terminal device 100 may include a sending part 1001, a second receiving part 1002 and a second switching part 1003.

The sending part 1001 is configured to send a reference message to a network device for a specific service; where, the reference message is configured to switch the specific service of the network device from a first connection path to a second connection path.

The second receiving part 1002 is configured to receive a switching command sent by the network device.

The second switching part 1003 is configured to switch the specific service from the first connection path to the second connection path according to the switching command.

In the foregoing solution, the sending part 1001 is configured to send the reference information to the network device through the first connection path or the second connection path; or, send the reference information to the network device jointly through the first connection path or the second connection path.

In addition, the embodiment further provides a computer readable medium that stores a program for switching a service path, and when the program for switching a service path is executed by at least one processor, the steps of the method described in the second embodiment above are implemented. For the specific description of the computer readable medium, please refer to the description in the fourth embodiment, which will not be elaborated here.

Based on the above composition of the terminal device 100 and the computer readable medium, referring to Fig. 11, which illustrates a specific hardware structure of the terminal device 100 provided by the embodiment of the present disclosure, the terminal device may include: a second network interface 1101, a second memory 1102 and a second processor 1103, where the components are coupled together through a bus system 1104. It can be understood that the bus system 1104 is configured to realize connection and communications between these components. The bus system 1104 includes a power bus, a control bus, and a status signal bus in addition to a data bus. However, for the sake of clarity, various buses are designated as the bus system 1104 in Fig. 11.

The second network interface 1101 is configured to receive and send a signal in a process of receiving and sending information with other external network element.

The second memory 1102 is configured to store a computer program capable of running on the second processor 1103.

The second processor 1103 is configured to, when running the computer program, execute:
sending a reference message to a network device for a specific service; where, the reference message is configured for the network device to switch the specific service from a first connection path to a second connection path;
receiving a switching command sent by the network device; and
switching the specific service from the first connection path to the second connection path according to the switching command.

It can be understood that the components in the specific hardware structure of the terminal device 100 in the embodiment are similar to the corresponding components in the fourth embodiment and will not be elaborated here.

Specifically, the second processor 1103 in the terminal device 100 is further configured to execute the method steps described in the second embodiment when running the computer program, which will not be elaborated here.

### Sixth embodiment

Based on the same inventive concept as the foregoing embodiments, referring to Fig. 12, which illustrates a system 120 for switching a service path provided by an embodiment of the present disclosure, the system 120 for switching a service path includes a network device 80 and a terminal device 100.

The network device 80 is configured to receive reference information sent by the terminal device 100; and
switch a specific service of the terminal device 100 from a first connection path to a second connection path according to the reference message; and
the terminal device 100 is configured to send the reference message to the network device 80 for the specific service; where, the reference message is configured for the network device 80 to switch the specific service from a first connection path to a second connection path;
receive a switching command sent by the network device 80; and
switch the specific service from the first connection path to the second connection path according to the switching command.

In a specific implementation process, the network device 80 in the embodiment may be the network device 80 described in any of the foregoing embodiments. The terminal device 100 may be the terminal device 100 described in any of the foregoing embodiments.

Those skilled in the art will appreciate that the embodiments of the present disclosure can be provided as a method, a system, or a computer program product. Accordingly, the present disclosure can take the form of a hardware embodiment, a software embodiment, or a combination embodiment of software and hardware. Moreover, the present disclosure can take the form of a computer program product embodied on one or more computer usable storage media (including but not limited to a disk storage and an optical storage, etc.) in which computer usable program codes are included.

The present disclosure has been described with reference to the flow charts and/or block diagrams of the method, device (system), and computer program products according to the embodiments of the present disclosure. It should be appreciated that each flow and/or block in the flow charts and/or block diagrams, and combinations of the flows and/or blocks in the flow charts and/or block diagrams can be implemented by computer program instructions. These computer program instructions may be provided to a general purpose computer, a special purpose computer, an embedded processor, or a processor of other programmable data processing device to produce a machine for the instructions executed by the computer or the processor of other programmable data processing device to generate an apparatus for implementing the functions specified in one or more flows of the flow chart and/or in one or more blocks of the block diagram.

These computer program instructions may also be provided to a computer-readable memory that can guide the computer or other programmable data processing device to work in a given manner, so that the instructions stored in the computer-readable memory generate a product including an instruction apparatus that implements the functions specified in one or more flows of the flow chart and/or in one or more blocks of the block diagram.

These computer program instructions may also be loaded to a computer, or other programmable data processing device, so that a series of operating steps are executed on the computer, or other programmable data processing device to produce processing implemented by the computer, so that the instructions executed in the computer or other programmable data processing device provide steps for implementing the functions specified in one or more flows of the flow chart and/or in one or more blocks of the block diagram.

The above description is merely preferred embodiments of the present disclosure, but is not intended to limit the protection scope of the present disclosure.

### INDUSTRIAL APPLICABILITY

In the embodiment, the network device can switch the specific service from the first connection path to the second connection path by receiving the reference message for the specific service sent by the terminal, so that the service transmission path can be switched under the multi-connection data transmission environment of 5G.

## Claims

1. A method for switching a service path, applied to a network device, comprising:
receiving (S301) reference information sent by a terminal device; and
switching (S302) a specific service of the terminal device from a first connection path to a second connection path according to the reference information, the step of receiving (S301) the reference information sent by the terminal device comprises:
receiving the reference information sent by the terminal device jointly through the first connection path and the second connection path,
wherein the reference information is carried in a control message or user data transmitted through a protocol stack interface between the network device and the terminal device,
wherein the reference information comprises at least one or more of followings: attribute information of the second connection path, description information of the specific service, preference description information and request information of the terminal device,
wherein the request information of the terminal device is configured to characterize that the terminal device desires to switch the specific service to the second connection path.

2. The method according to claim 1, wherein the first connection path comprises a first access link between the terminal device and a first access device, and a first core network link between the first access device and a core network device; and the second connection path comprises a second access link between the terminal device and a second access device, and a second core network link between the second access device and the core network device.

3. The method according to claim 1, wherein:
the attribute information of the second connection path comprises at least one or more of followings: type information of the second connection path; identification information of the second connection path; link quality information of the second connection path or available instruction information of the second connection path, wherein:
the description information of the specific service comprises at least one or more of followings: Packet Data Network (PDN) connection information of the specific service, Quality of Service (Qos) information of the specific service, bearer information of the specific service, data flow information of the specific service, or Protocol Data Unit (PDU) session of the specific service, wherein:
the preference description information of the terminal device is configured to indicate preference information of a connection path used by the terminal device for the specific service.

4. A method for switching a service path, applied to a terminal device, comprising:
sending (S401) reference information to a network device for a specific service; wherein, the reference information is configured for the network device to switch the specific service from a first connection path to a second connection path;
receiving (S402) a switching command sent by the network device; and
switching (S403) the specific service from the first connection path to the second connection path according to the switching command, the step of sending (S401) the reference information to the network device for the specific service comprises:
sending the reference information to the network device jointly through the first connection path and the second connection path,
wherein the reference information is carried in a control message or user data transmitted through a protocol stack interface between the network device and the terminal device,
wherein the reference information comprises at least one or more of followings: attribute information of the second connection path, description information of the specific service, preference description information and request information of the terminal device,
wherein the request information of the terminal device is configured to characterize that the terminal device desires to switch the specific service to the second connection path.

5. The method according to claim 4, wherein the first connection path comprises a first access link between the terminal device and a first access device, and a first core network link between the first access device and a core network device; and the second connection path comprises a second access link between the terminal device and a second access device, and a second core network link between the second access device and the core network device.

6. The method according to claim 4, wherein the attribute information of the second connection path comprises at least one or more of followings: type information of the second connection path; identification information of the second connection path; link quality information of the second connection path and available instruction information of the second connection path,
wherein the description information of the specific service comprises at least one or more of followings: Packet Data Network (PDN) connection information of the specific service, Quality of Service (Qos) information of the specific service, bearer information of the specific service, data flow information of the specific service, and Protocol Data Unit (PDU) session of the specific service,
wherein the preference description information of the terminal device is configured to indicate preference information of a connection path used by the terminal device for the specific service.

7. The method according to claim 4, wherein the switching message comprises at least one or more of followings:
an acknowledgment command for the terminal device to switch the specific service to the second connection path;
acknowledgment information for the specific service switched to the second connection path;
attribute information of the second connection path;
duration information for switching to the second connection path;
activation time point information for switching to the second connection path; and
configuration information for switching to the second connection path.

8. The method according to claim 4, wherein the specific service comprises a task newly created by the terminal device or a service currently performed by the terminal device.

9. A network device, comprising: a first network interface, a first memory and a first processor, wherein:
the first network interface is configured to receive and send a signal in a process of receiving and sending information with another external network element;
the first memory is configured to store a computer program capable of running on the first processor; and
the first processor is configured to execute the steps of the method according to any one of claims 1 to 3 when running the computer program.

10. A terminal device, comprising a second network interface, a second memory and a second processor;
wherein, the second network interface is configured to receive and send a signal in a process of receiving and sending information with another external network element;
the second memory is configured to store a computer program capable of running on the second processor; and
the second processor is configured to execute the steps of the method according to any one of claims 4 to 8 when running the computer program.

## Patentansprüche

1. Verfahren zum Wechseln eines Dienstwegs, das auf eine Netzwerkvorrichtung angewendet wird und umfasst:
Empfangen (S301) von Referenzinformationen, die von einer Endgerätevorrichtung gesendet werden; und
Wechseln (S302) eines spezifischen Dienstes der Endgerätevorrichtung von einem ersten Verbindungsweg auf einen zweiten Verbindungsweg gemäß den Referenzinformationen,
wobei der Schritt des Empfangens (S301) der von der Endgerätevorrichtung gesendeten Referenzinformationen umfasst:
gemeinsames Empfangen der von der Endgerätevorrichtung gesendeten Referenzinformationen durch den ersten Verbindungsweg und den zweiten Verbindungsweg,
wobei die Referenzinformationen in einer Steuernachricht oder Benutzerdaten, die durch eine Protokollstapelschnittstelle zwischen der Netzwerkvorrichtung und der Endgerätevorrichtung gesendet werden, übertragen werden,
wobei die Referenzinformationen mindestens eine oder mehrere von Folgenden umfassen: Attributinformationen des zweiten Verbindungswegs, Beschreibungsinformationen des spezifischen Dienstes, Präferenzbeschreibungsinformationen und Anforderungsinformationen der Endgerätevorrichtung,
wobei die Anforderungsinformationen der Endgerätevorrichtung so konfiguriert sind, dass sie beschreiben, dass die Endgerätevorrichtung den spezifischen Dienst auf den zweiten Verbindungsweg zu wechseln wünscht.

2. Verfahren nach Anspruch 1, wobei der erste Verbindungsweg eine erste Zugriffsstrecke zwischen der Endgerätevorrichtung und einer ersten Zugriffsvorrichtung und eine erste Kernnetzwerkstrecke zwischen der ersten Zugriffsvorrichtung und einer Kernnetzwerkvorrichtung umfasst; und der zweite Verbindungsweg eine zweite Zugriffsstrecke zwischen der Endgerätevorrichtung und einer zweiten Zugriffsvorrichtung und eine zweite Kernnetzwerkstrecke zwischen der zweiten Zugriffsvorrichtung und der Kernnetzwerkvorrichtung umfasst.

3. Verfahren nach Anspruch 1, wobei:
die Attributinformationen des zweiten Verbindungswegs mindestens eine oder mehrere von Folgenden umfassen: Typinformationen des zweiten Verbindungswegs; Identifikationsinformationen des zweiten Verbindungswegs; Streckenqualitätsinformationen des zweiten Verbindungswegs oder verfügbare Anweisungsinformationen des zweiten Verbindungswegs, wobei:
die Beschreibungsinformationen des spezifischen Dienstes mindestens eine oder mehrere von Folgenden umfassen: Paketdatennetzwerk-(PDN-)Verbindungsinformationen des spezifischen Dienstes, Dienstqualitäts-(QoS-)Informationen des spezifischen Dienstes, Trägerinformationen des spezifischen Dienstes, Datenflussinformationen des spezifischen Dienstes oder Protokolldateneinheits-(PDU-)Sitzung des spezifischen Dienstes; wobei:
die Präferenzbeschreibungsinformationen der Endgerätevorrichtung konfiguriert sind, um Präferenzinformationen eines Verbindungswegs anzugeben, der von der Endgerätevorrichtung für den spezifischen Dienst verwendet wird.

4. Verfahren zum Wechseln eines Dienstwegs, das auf eine Endgerätevorrichtung angewendet wird und umfasst:
Senden (S401) von Referenzinformationen an eine Netzwerkvorrichtung für einen spezifischen Dienst; wobei die Referenzinformationen für die Netzwerkvorrichtung zum Wechseln des spezifischen Dienstes von einem ersten Verbindungsweg auf einen zweiten Verbindungsweg konfiguriert sind;
Empfangen (S402) eines Wechselbefehls, der von der Netzwerkvorrichtung gesendet wird; und
Wechseln (S403) des spezifischen Dienstes vom ersten Verbindungsweg auf einen zweiten Verbindungsweg gemäß dem Wechselbefehl,
wobei der Schritt des Sendens (S401) der Referenzinformationen an die Netzwerkvorrichtung für den spezifischen Dienst umfasst:
gemeinsames Senden der Referenzinformationen durch den ersten Verbindungsweg und den zweiten Verbindungsweg an die Netzwerkvorrichtung,
wobei die Referenzinformationen in einer Steuernachricht oder Benutzerdaten, die durch eine Protokollstapelschnittstelle zwischen der Netzwerkvorrichtung und der Endgerätevorrichtung gesendet werden, übertragen werden,
wobei die Referenzinformationen mindestens eine oder mehrere von Folgenden umfassen: Attributinformationen des zweiten Verbindungswegs, Beschreibungsinformationen des spezifischen Dienstes, Präferenzbeschreibungsinformationen und Anforderungsinformationen der Endgerätevorrichtung,
wobei die Anforderungsinformationen der Endgerätevorrichtung so konfiguriert sind, dass sie beschreiben, dass die Endgerätevorrichtung den spezifischen Dienst auf den zweiten Verbindungsweg zu wechseln wünscht.

5. Verfahren nach Anspruch 4, wobei der erste Verbindungsweg eine erste Zugriffsstrecke zwischen der Endgerätevorrichtung und einer ersten Zugriffsvorrichtung und eine erste Kernnetzwerkstrecke zwischen der ersten Zugriffsvorrichtung und einer Kernnetzwerkvorrichtung umfasst; und der zweite Verbindungsweg eine zweite Zugriffsstrecke zwischen der Endgerätevorrichtung und einer zweiten Zugriffsvorrichtung und eine zweite Kernnetzwerkstrecke zwischen der zweiten Zugriffsvorrichtung und der Kernnetzwerkvorrichtung umfasst.

6. Verfahren nach Anspruch 4, wobei die Attributinformationen des zweiten Verbindungswegs mindestens eine oder mehrere von Folgenden umfassen: Typinformationen des zweiten Verbindungswegs; Identifikationsinformationen des zweiten Verbindungswegs; Streckenqualitätsinformationen des zweiten Verbindungswegs und verfügbare Anweisungsinformationen des zweiten Verbindungswegs,
wobei die Beschreibungsinformationen des spezifischen Dienstes mindestens eine oder mehrere von Folgenden umfassen: Paketdatennetzwerk-(PDN-)Verbindungsinformationen des spezifischen Dienstes, Dienstqualitäts-(QoS-)Informationen des spezifischen Dienstes, Trägerinformationen des spezifischen Dienstes, Datenflussinformationen des spezifischen Dienstes und Protokolldateneinheits-(PDU-)Sitzung des spezifischen Dienstes;
wobei die Präferenzbeschreibungsinformationen der Endgerätevorrichtung konfiguriert sind, um Präferenzinformationen eines Verbindungswegs anzugeben, der von der Endgerätevorrichtung für den spezifischen Dienst verwendet wird.

7. Verfahren nach Anspruch 4, wobei die Wechselnachricht mindestens eines oder mehrere von Folgenden umfasst:
einen Bestätigungsbefehl für die Endgerätevorrichtung zum Wechseln des spezifischen Dienstes auf den zweiten Verbindungsweg;
Bestätigungsinformationen für den auf den zweiten Verbindungsweg gewechselten spezifischen Dienst;
Attributinformationen des zweiten Verbindungswegs;
Dauerinformationen zum Wechseln auf den zweiten Verbindungsweg;
Aktivierungszeitpunktinformation zum Wechseln auf den zweiten Verbindungsweg; und
Konfigurationsinformationen zum Wechseln auf den zweiten Verbindungsweg.

8. Verfahren nach Anspruch 4, wobei der spezifische Dienst eine von der Endgerätevorrichtung neu erstellte Aufgabe oder einen von der Endgerätevorrichtung gegenwärtig durchgeführten Dienst umfasst.

9. Netzwerkvorrichtung, umfassend: eine erste Netzwerkschnittstelle, einen ersten Speicher und einen ersten Prozessor, wobei:
die erste Netzwerkschnittstelle zum Empfangen und Senden eines Signals in einem Prozess zum Empfangen und Senden von Informationen mit einem anderen externen Netzwerkelement konfiguriert ist;
der erste Speicher zum Speichern eines Computerprogramms konfiguriert ist, das auf dem ersten Prozessor ausgeführt werden kann; und
der erste Prozessor bei Ausführung des Computerprogramms zum Ausführen der Schritte des Verfahrens nach einem der Ansprüche 1 bis 3 konfiguriert ist.

10. Endgerätevorrichtung, umfassend eine zweite Netzwerkschnittstelle, einen zweiten Speicher und einen zweiten Prozessor;
wobei die zweite Netzwerkschnittstelle zum Empfangen und Senden eines Signals in einem Prozess zum Empfangen und Senden von Informationen mit einem anderen externen Netzwerkelement konfiguriert ist;
der zweite Speicher zum Speichern eines Computerprogramms konfiguriert ist, das auf dem zweiten Prozessor ausgeführt werden kann; und
der zweite Prozessor bei Ausführung des Computerprogramms zum Ausführen der Schritte des Verfahrens nach einem der Ansprüche 4 bis 8 konfiguriert ist.

## Revendications

1. Procédé de commutation d'un chemin de service, appliqué à un dispositif de réseau, comprenant :
la réception (S301) d'informations de référence envoyées par un dispositif terminal ; et
la commutation (S302) d'un service spécifique du dispositif terminal d'un premier chemin de connexion sur un second chemin de connexion conformément aux informations de référence,
l'étape de réception (S301) des informations de référence envoyées par le dispositif terminal comprend :
la réception des informations de référence envoyées par le dispositif terminal conjointement sur le premier chemin de connexion et le second chemin de connexion,
dans lequel les informations de référence sont convoyées dans un message de commande ou des données d'utilisateur transmises par l'intermédiaire d'une interface de pile de protocoles entre le dispositif de réseau et le dispositif terminal,
dans lequel les informations de référence comprennent au moins une ou plusieurs des informations suivantes : des informations d'attributs du second chemin de connexion, des informations de description du service spécifique, des informations de description de préférences et des informations de demande du dispositif terminal,
dans lequel les informations de demande du dispositif terminal sont configurées pour caractériser le fait que le dispositif terminal souhaite commuter le service spécifique sur le second chemin de connexion.

2. Procédé selon la revendication 1, dans lequel le premier chemin de connexion comprend une première liaison d'accès entre le dispositif terminal et un premier dispositif d'accès, et une première liaison de réseau central entre le premier dispositif d'accès et un dispositif de réseau central ; et le second chemin de connexion comprend une seconde liaison d'accès entre le dispositif terminal et un second dispositif d'accès, et une seconde liaison de réseau central entre le second dispositif d'accès et le dispositif de réseau central.

3. Procédé selon la revendication 1, dans lequel :
les informations d'attributs du second chemin de connexion comprennent au moins une ou plusieurs des informations suivantes : des informations de type du second chemin de connexion ; des informations d'identification du second chemin de connexion ; des informations de qualité de liaison du second chemin de connexion ou des informations d'instructions disponibles du second chemin de connexion, dans lequel :
les informations de description du service spécifique comprennent au moins une ou plusieurs des informations suivantes : des informations de connexion de réseau de données par paquets (PDN) du service spécifique, des informations de qualité de service (Qos) du service spécifique, des informations de support du service spécifique, des informations de flux de données du service spécifique ou une session d'unité de données de protocole (PDU) du service spécifique, dans lequel:
les informations de description de préférences du dispositif terminal sont configurées pour indiquer des informations de préférence d'un chemin de connexion utilisé par le dispositif terminal pour le service spécifique.

4. Procédé de commutation d'un chemin de service, appliqué à un dispositif terminal, comprenant :
l'envoi (S401) d'informations de référence à un dispositif de réseau pour un service spécifique ; les informations de référence étant configurées pour que le dispositif de réseau bascule le service spécifique d'un premier chemin de connexion sur un second chemin de connexion,
la réception (S402) d'une commande de commutation envoyée par le dispositif de réseau ; et
la commutation (S403) du service spécifique du premier chemin de connexion sur le second chemin de connexion conformément à la commande de commutation,
l'étape d'envoi (S401) des informations de référence au dispositif de réseau pour le service spécifique comprend :
l'envoi des informations de référence au dispositif de réseau conjointement sur le premier chemin de connexion et le second chemin de connexion,
dans lequel les informations de référence sont convoyées dans un message de commande ou des données d'utilisateur transmises par l'intermédiaire d'une interface de pile de protocoles entre le dispositif de réseau et le dispositif terminal,
dans lequel les informations de référence comprennent au moins une ou plusieurs des informations suivantes : des informations d'attributs du second chemin de connexion, des informations de description du service spécifique, des informations de description de préférences et des informations de demande du dispositif terminal,
dans lequel les informations de demande du dispositif terminal sont configurées pour caractériser le fait que le dispositif terminal souhaite commuter le service spécifique sur le second chemin de connexion.

5. Procédé selon la revendication 4, dans lequel le premier chemin de connexion comprend une première liaison d'accès entre le dispositif terminal et un premier dispositif d'accès, et une première liaison de réseau central entre le premier dispositif d'accès et un dispositif de réseau central ; et le second chemin de connexion comprend une seconde liaison d'accès entre le dispositif terminal et un second dispositif d'accès, et une seconde liaison de réseau central entre le second dispositif d'accès et le dispositif de réseau central.

6. Procédé selon la revendication 4, dans lequel les informations d'attributs du second chemin de connexion comprennent au moins une ou plusieurs des informations suivantes : des informations de type du second chemin de connexion ; des informations d'identification du second chemin de connexion ; des informations de qualité de liaison du second chemin de connexion ou des informations d'instructions disponibles du second chemin de connexion, dans lequel :
les informations de description du service spécifique comprennent au moins une ou plusieurs des informations suivantes : des informations de connexion de réseau de données par paquets (PDN) du service spécifique, des informations de qualité de service (Qos) du service spécifique, des informations de support du service spécifique, des informations de flux de données du service spécifique ou une session d'unité de données de protocole (PDU) du service spécifique,
dans lequel les informations de description de préférences du dispositif terminal sont configurées pour indiquer des informations de préférence d'un chemin de connexion utilisé par le dispositif terminal pour le service spécifique.

7. Procédé selon la revendication 4, dans lequel le message de commutation comprend au moins une ou plusieurs des informations suivantes :
une commande d'accusé de réception permettant au dispositif terminal de basculer le service spécifique sur le second chemin de connexion ;
des informations d'accusé de réception pour le service spécifique basculé sur le second chemin de connexion ;
des informations d'attributs du second chemin de connexion,
des informations de durée pour la commutation sur le second chemin de connexion ;
des informations d'instant d'activation pour la commutation sur le second chemin de connexion ; et
des informations de configuration pour la commutation sur le second chemin de connexion.

8. Procédé selon la revendication 4, dans lequel le service spécifique comprend une tâche nouvellement créée par le dispositif terminal ou un service actuellement exécuté par le dispositif terminal.

9. Dispositif des réseau comprenant : une première interface réseau, une première mémoire et un premier processeur, dans lequel :
la première interface réseau est configurée pour recevoir et envoyer un signal dans un processus de réception et d'envoi d'informations avec un autre élément de réseau externe ;
la première mémoire est configurée pour stocker un programme d'ordinateur exécutable sur le premier processeur ; et
le premier processeur est configuré pour exécuter les étapes du procédé selon l'une quelconque des revendications 1 à 3 lors de l'exécution du programme informatique.

10. Dispositif terminal, comprenant une seconde interface réseau, une seconde mémoire et un second processeur ;
dans lequel la seconde interface réseau est configurée pour recevoir et envoyer un signal dans un processus de réception et d'envoi d'informations avec un autre élément de réseau externe ;
la seconde mémoire est configurée pour stocker un programme d'ordinateur exécutable sur le second processeur ; et
le second processeur est configuré pour exécuter les étapes du procédé selon l'une quelconque des revendications 4 à 8 lors de l'exécution du programme d'ordinateur.
